# EUROPEAN PATENT APPLICATION

(11) **EP 0 887 916 A2**
(43) Date of publication of application: **30.12.1998**
(21) Application number: 98305153.3
(22) Date of filing: 29.06.1998
(51) Int. Cl.: H02P 7/00

(54) **Energization controller of electric motor**

(30) Priority: 27.06.1997 JP 172490/97
(71) Applicant: Aisin Seiki Kabushiki Kaisha, Kariya-shi, Aichi-ken (JP)
(72) Inventor: Sugiyama, Masanori, Nishio-shi, Aichi-ken (JP)
(74) Representative: SERJEANTS

(57) **Abstract**

An energization controller (10) of an electric motor (30) which enables a desired chopping frequency to be maintained without an increase in current amplitude. The energization controller (10) is provided wi-th a chopping control means which turns off both of the first and second switching elements (20a and 20b) when the value of the current flowing through the phase winding (26) of the motor (30) exceeds a reference current value, the turns on the second switching element (20b) after a predetermined period of time has elapsed or when the energization current falls below the reference current value, and then turns on both of the switching elements (20a and 20b) when the next clock pulse of a synchronizing signal (CLK15K) occurs after the energization signal falls below the reference current value.

## Description

### Field of Invention

The present invention relates to an- energization controller for controlling the function of a H-type switching circuit for feeding chopped electricity to the windings of an electrical motor.

### Prior Art

In general, a controller of the type describe above controls the energization of each phase winding of an electrical motor by detecting the value of current running through each phase winding by use of a resistor or current transformer, by comparing the detected current value with a predefined reference current value in a binary fashion, by turning on a switching element when the reference current value is greater than the detected current value and by turning off the switching element when the reference current value equals to or falls below the detected current value. Thereby, the switching element is repeatedly switched ON and OFF, so that the average value of the current flowing through the winding is regulated to a value corresponding (or close) to the reference current value.

It may be noted that in an energization controller of this type, the higher the ON/OFF frequency (chopping frequency) of the switching element, the more the energy loss in the switching element and associated equipment, thus increasing the calorific energy consumed by the controller. Therefore it is not preferable to increase the chopping frequency too much.

On the contrary, when the chopping frequency is too low, the threshold difference between the reference current value and the actual current value increases in magnitude, thus reducing the accuracy of control. Additionally, it is not preferable for the chopping frequency to fall within the human audible frequency range.

An energization controller has been proposed in Japanese Laid Open Patent No. Hei. 8-172793 which comprises an enable signal generating means for generating an enable flag signal which is set to a first level (ON disabled) when the energization current value exceeds the reference current value and reverts to a second level (ON enabled) due to the reference chopping timing of a synchronizing signal. Thereby, the switching element will only be switched from OFF to ON during the period when the enable flag signal is set to the second level and the reference current value exceeds the energization current value. Thus, the frequency of switching is dictated by the frequency of the synchronizing signal which is normally at a frequency in the vicinity of the upper limit of the human audible frequency range, e.g, 15 KHz.

In this energization controller, a H-type switching circuit is used to control a motor energizing current by PMW to smooth the rise and fall of the motor energizing current and to control the switching modes so as to improve the shortage of torque.

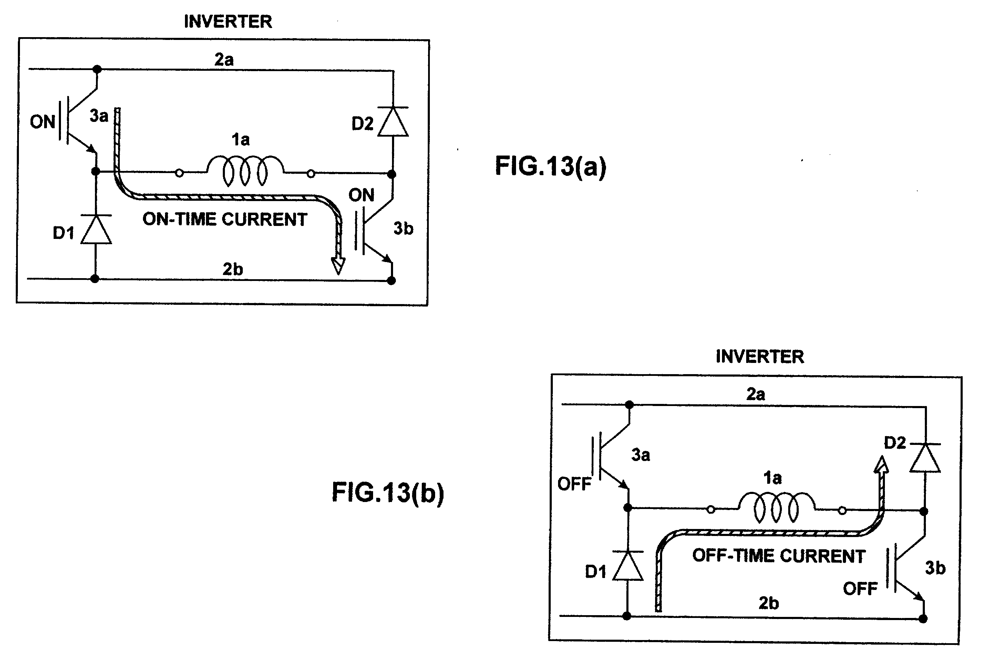

As shown in FIGs. 13a and 13b, the H-type switching circuit referred to above comprises a first switching element 3a interposed between one end of an electric coil la of the electric motor and a first power line 2a, a second switching element 3b interposed between the other end of the electric coil la and a second power line 2b, a first diode D1 which is interposed between one end of the coil la and the second power line 2b and which permits a current to conduct from the latter to the former and a second diode D2 which is interposed between the other end of the electric coil la and the first power line 2a and which permits a current to conduct from the former to the latter.

A rotational driving current flows through the electric coil la as shown in FIG. 13a when the first and second switching elements 3a and 3b are both turned on and a feedback current to the power source, caused by the induced voltage of the electric coil la, flows through the electric coil la as shown in FIG. 13b when both switching elements 13a and 13b are turned off. Hence, a pulsating current whose fall speed is relatively quick flows through the electric coil la by the repeated operation of the switching elements 3a and 3b. This switching mode will be referred to as "hard-chopping" in the present specification. In this switching mode, energy generated by the electric coil la is supplied (regenerated) to the first power line 2a and the current sharply decreases at the time interval when both switching elements 3a and 3b are turned off as shown in FIG. 13b.

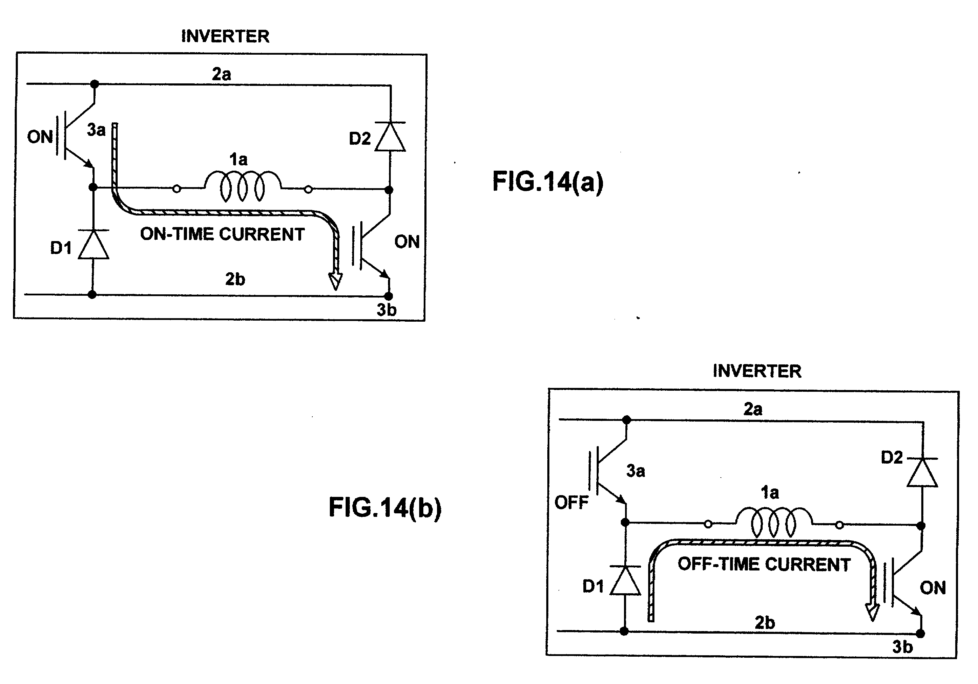

A pulsation current whose fall speed is relatively slow flows through the electric coil la by alternately repeating states of turning on both of the first and second switching elements 3a and 3b as shown in FIG. 14a (similar to FIG. 13a) and of turning off only the first switching element 3a while keeping the second switching element 3b on as shown in FIG. 14b. This switching mode will be referred to as "soft-chopping" in the present specification. In this mode, the current decreases moderately during the period when the first switching element 3a is off and the second switching element 3b is on as shown in FIG. 14b.

The energization controller disclosed above has eliminated the problem of shortage of rotation torque by selecting either the above-mentioned hard-chopping mode of operation or the soft-chopping mode of operation based on the number of revolutions of the motor and the required torque.

A switched reluctance motor (hereinafter referred to as a "SR motor") comprises a rotor which is generally constructed so that the pole portions protrude outward, a stator which is constructed so that its pole portions protrude inward and a coil wound around each pole of the stator. In the motor, magnetic mechanical resistance varies depending on the rotational position of the rotor with respect to the stator, so that the inductance L of the coil varies accordingly. When this inductance L is small, the coil current falls with a desired fall speed by the effect of either the hard-chopping or soft-chopping modes, so that it is possible to maintain a desired chopping frequency using the above-mentioned prior art energization controller. However, when the inductance L is large, the fall speed of the coil current slows down during the soft-chopping mode and the state of the reference current value with respect to the coil current value is maintained for a period which is longer than the interval between pulses from the synchronizing signal. Hence, the switching elements are delayed in switching from OFF to ON. Due to this, the chopping frequency drops and mechanical vibrations are established which may be audible to the human ear.

Although the chopping frequency will not drop when the controller operates in the hard-chopping mode even when the inductance L is large, the amplitude of current pulsations increases and therefore the pulsation of the magnetic attractive force applied to the rotor of the SR motor increases, thus causing vibration and possibly audible noise.

Accordingly, it is the objective of the present invention to maintain the desired chopping frequency without increasing the current amplitude during all stages of motor activity.

### Summary Of The Invention

In order to solve the above-mentioned problems associated with the prior art, the following technological means is incorporated into the present invention. That is, an energization controller of an electric motor for controlling the energization of each phase windings of the motor by comparing the relationship of magnitude of a first signal, corresponding to the actual current flowing through the winding, with a second signal, which defines a reference current value, and by utilizing a binary signal corresponding to the result of the comparison. The energization controller comprises a first switching means interposed between one end of the electric winding of the motor and a first power line; a second switching means interposed between the other end of the electric winding of the motor and a second power line; a first diode which is interposed between one end of the electric winding and the second power line and which permits current to conduct from the latter to the former; a second diode which is interposed between the other end of the electric winding and the first power line and which permits current to conduct from the former to the latter; a synchronizing signal providing a clock pulse at a predetermined frequency; and a chopping control means which, when the first signal exceeds the second signal, turns off both of the first and second switching means and then, after a predetermined period of time, turns on only the second switching means and which, when the next clock pulse of the synchronizing signal occurs after the first signal falls below the second, turns on both of the first and second switching means.

It is possible to arrange the above-mentioned controller so that the chopping control means turns off both of the switching means when the first signal exceeds the second signal and then, when the first signal falls below the second signal, turns on only the second switching means and then, when the next clock pulse of the synchronizing signal occurs after the first signal falls below the second, turns on both of the first and second switching means.

Accordingly, the winding current falls with a relatively quick fall speed by turning off both of the switching means (hard-chopping mode) when the first signal is larger than the second signal and then the winding current falls relatively slowly when only the second switching means is turned on (soft-chopping), so that it is possible to maintain the desired chopping frequency without increasing the current amplitude regardless of the magnitude of the inductance of the winding.

### Description Of Drawings

FIG. 1 is a block diagram showing the structure of an energization controller of a motor according to a first embodiment of the present invention;
FIG. 2 is a block diagram showing in detail part of the structure of the energization controller in FIG. 1;
FIG. 3 is a block diagram showing the partial hard-chopping circuit of FIG. 2;
FIG. 4 is a block diagram showing the timing control circuit of FIG. 2;
FIG. 5 is a side view of the SR motor of FIG. 1;
FIG. 6 is a time chart showing the operation of the partial hard-chopping circuit of FIG. 3;
FIG. 7 is a time chart showing the waveforms of a reference current value and an energization current;
FIG. 8 is a block diagram showing the structure of an energization controller of a motor according to a second and third embodiment of the invention;
FIG. 9 is a block diagram showing the partial hard-chopping circuit according to the second embodiment of the invention;
FIG. 10 is a time chart showing the operation of the partial hard-chopping circuit of FIG. 9;
FIG. 11 is a block diagram showing the partial hard-chopping circuit according to the third embodiment of the invention;
FIG. 12 is a time chart showing the operation of the partial hard-chopping circuit of FIG. 11;
FIGs. 13a and 13b are diagrams showing the current in the winding of the motor when controlled in the hard-chopping mode by the H-type switching circuit of the prior art energization controller, wherein FIG. 13a shows the current conducting direction when the driving current passes through the motor and FIG. 13b shows the current conducting direction when the driving current is turned off; and
FIGs. 14a and 14b are diagrams showing the current in the winding of the motor when controlled in the soft-chopping mode by the H-type switching circuit of the prior art energization controller, wherein FIG. 14a shows the current conducting direction when the driving current passes through the motor and FIG. 14b shows the current conducting direction when the driving current is turned off.

### Specific Description Of Preferred Embodiments

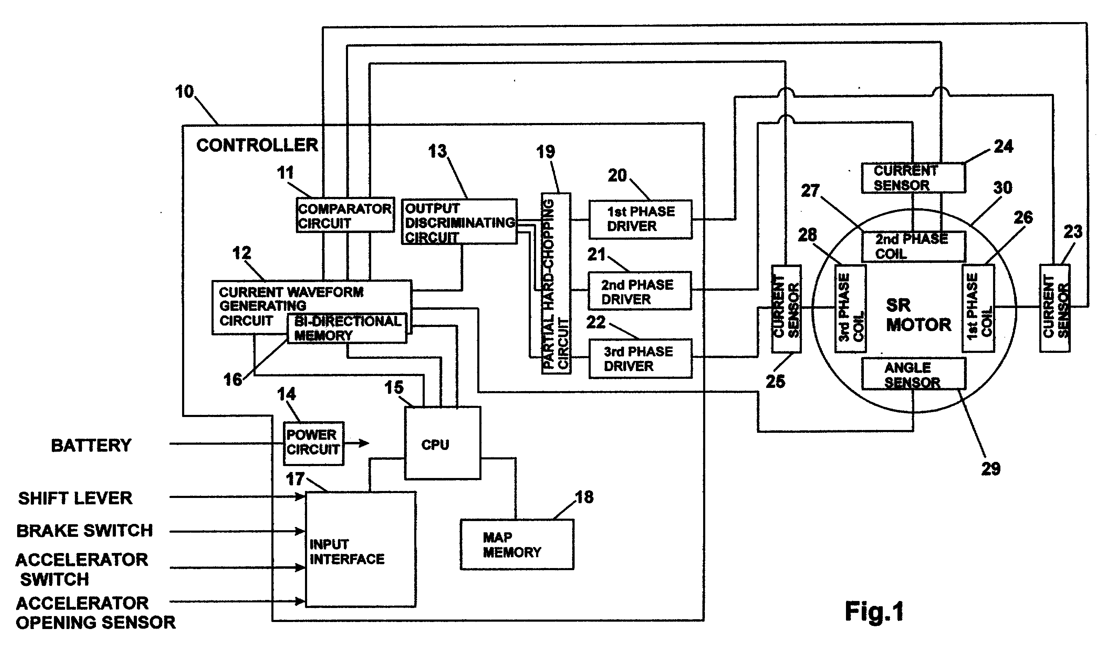

The unit shown in FIG. 1 constitutes a main part of a driving unit of an electric car. According to the present embodiment, the exemplary unit comprises one SR motor 30 which is controlled by a controller 10. The controller 10 controls the drive of the SR motor based upon information input from a shift lever, a brake switch, an accelerator switch and an accelerator opening sensor. Electric power for the control is supplied from a car battery.

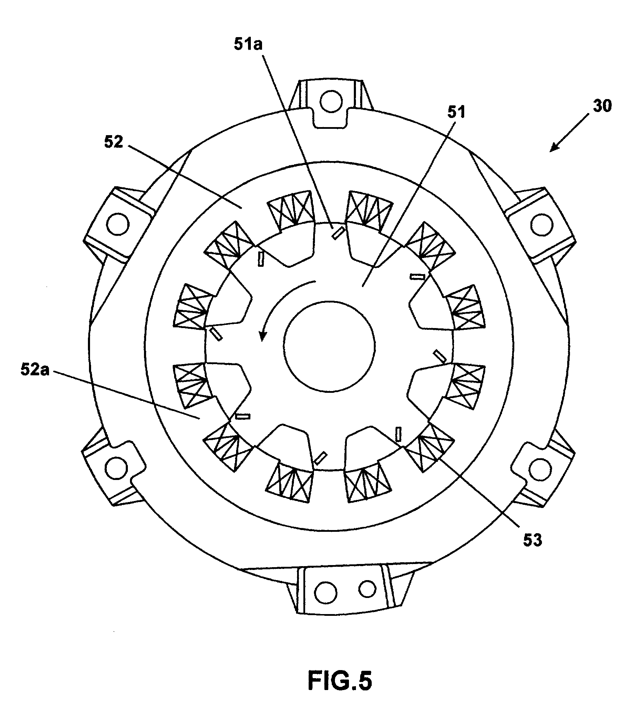

As shown in FIG. 5, the SR motor 30 comprises a hollow cylindrical stator 52 having poles 52a which protrude inward in the radial direction and a rotor 51 having poles 51a which protrude outwardly in the radial direction. In the present embodiment, the stator 52 has 12 poles 52a and the rotor 51 has eight poles 51a. A coil 53 is wound around each pole 52a of the stator 52. The coils 53 are specifically arranged into three groups A, B and C so as to establish a three phase network. The coils 53 in any one group are serially connected and thereby a first phase winding 26, a second phase winding 27 and a third phase winding 28 are created as shown in FIG. 1.

When one of the phase windings 26 through to 28 is energized, attractive forces act between the stator poles 52a and the rotor poles 51a, thus rotating the rotor 51. The rotation of the rotor 51 is detected by an angle sensor 29 and energization of the phase windings 26 through to 28 occurs sequentially so as to continuously rotate the rotor 51. The first, second and third phase windings 26 through to 28 are connected respectively to a first, second and third phase driver 20 through to 22 within the controller 10. A current sensor 23 through to 25 is provided on each phase winding 26 through to 28. These current sensors 26, 27 and 28 output voltages that are proportional to the currents actually flowing through the first, second and third phase windings 26 through to 28 as current signals (energization current values).

The controller 10 comprises a CPU (microprocessor) 15, an input interface 17, a memory map 18, a power circuit 14, a current waveform generating circuit 12, a comparator circuit 11, an output discriminating circuit 13, a partial hard-chopping circuit 19, the first phase driver 20, the second phase driver 21 and the third phase driver 22. The input interface 17 receives signals from the shift lever, the brake switch, the accelerator switch and the accelerator opening sensor equipped in the vehicle and sends these signals to the CPU 15. Based on the information obtained from these signals, the CPU 15 calculates a target driving speed and driving torque for the SR motor 30 sequentially and based on the calculated results, evaluates the ideal current waveforms to be transferred to the phase windings 26, 27 and 28. The CPU 15 then reads the found current waveforms from the memory map 18 (a current map memory 18a and a shift memory 18b) and transfers this value to a bi-directional memory 16 provided within the current waveform generating circuit 12.

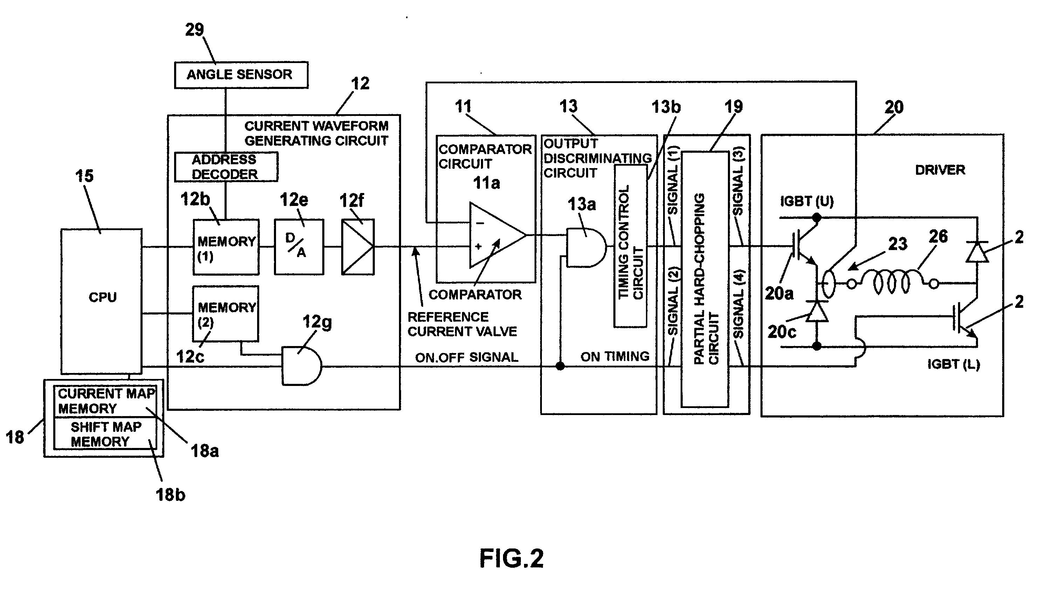

FIG. 2 shows in detail part of the structure of the energization controller in FIG. 1. Although only the circuit for controlling the energization of the first phase winding 26 of the SR motor 30 is shown, the unit actually contains the same circuits for controlling the energization of the second and third phase windings 27 and 28.

As shown in FIG. 2, the current waveform generating circuit 12 comprises an address decoder 12a, two memories 12b and 12c, a digital-analog converter 12e, an output buffer 12f and an AND circuit 12g. The output from the angle sensor 29 is converted into an address value by the address decoder 12a so as to specify a reading address for the memories 12b and 12c. Therefore, a target current value corresponding to the angle of rotation of the SR motor 30 is read from the memories 12b and 12c so as to verify whether or not to energize the windings at any specific point in time. The value read from the memory 12c is output as an ON/OFF signal via the AND circuit 12g. It is noted that a control signal from the CPU 15 is also input to the AND circuit 12g, so that the ON/OFF signal can be turned off regardless of the value held in memory 12c.

When the value read form memory 12b is a digital value, the digital-analog converter 12e converts it into an analog signal which is sent to the non-inverting input terminal of a comparator 11a within the comparator circuit 11 via the output buffer 12f. This signal defines a reference current value. The current flowing through the first phase winding 26 is detected by the current sensor 23, the signal from which is sent to the inversion input terminal of the comparator 11a. This signal defines a energization current value. The comparator 11a compares the reference current value with the energization current value and outputs its result as a current comparison signal to an AND circuit 13a within the output discriminating circuit 13.

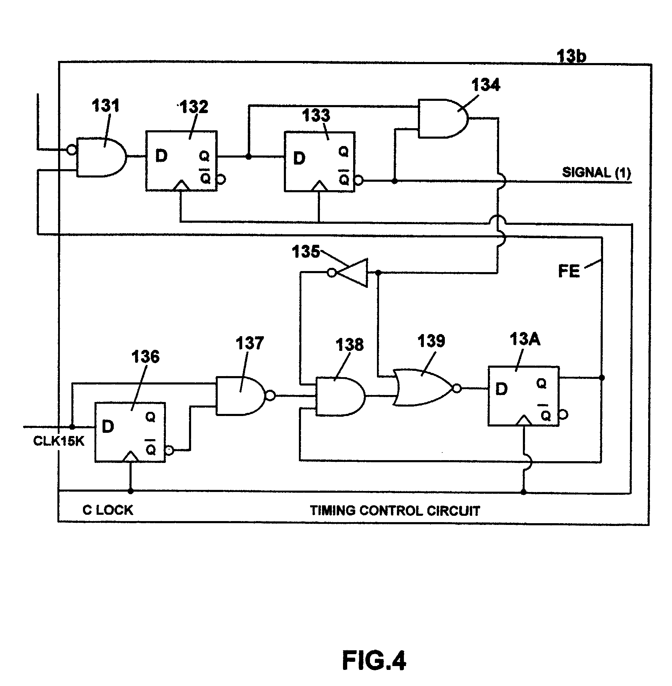

As shown in FIGs. 2 and 4, the output discriminating circuit 13 comprises the AND circuit 13a and a timing control circuit 13b. The current comparison signal output from the comparator 11a and the ON/OFF signal output from the AND circuit 12g are input to the input terminals of the AND circuit 13a. The output of the AND circuit 13a is connected to an input terminal of the timing control circuit 13b.

The timing control circuit 13b utilizes a pulsed synchronizing signal CLK15K (ON enabled timing) whose frequency is 15 KHz and comprises gate circuits 131, 134, 137, 138 and 139, D-type flip-flops 132, 133, 136 and 13A and an inverter 135 in the present embodiment as shown in FIG. 4. The structure of the timing control circuit 13b is the same at that in Japanese Laid Open Patent No. Hei. 8-172793, discussed previously. When the signal output from the AND circuit 13a changes to the condition where the energization current value exceeds the reference current value, a signal FE of the timing control circuit 13b in FIG. 4 turns to a Hi level (ON disabled). The signal FE turns to Lo level (ON enabled) on the rise of each pulse from the synchronizing signal CLK15K. Thereby, the signal (1), which is output from the from the timing control circuit 13b, turns to OFF when the energization current value exceeds the reference current value. Conversely, the output signal (1) turns to ON when the signal FE is "ON enabled" and when the reference current value equals to or exceeds the energization current value.

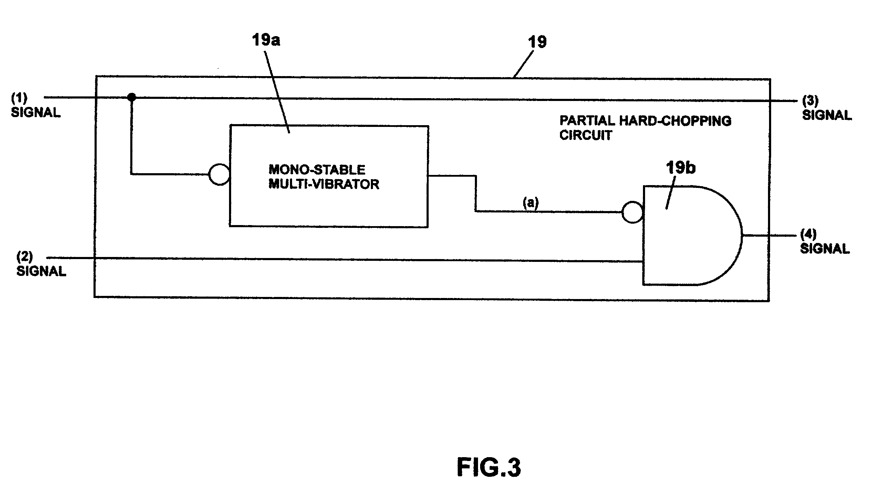

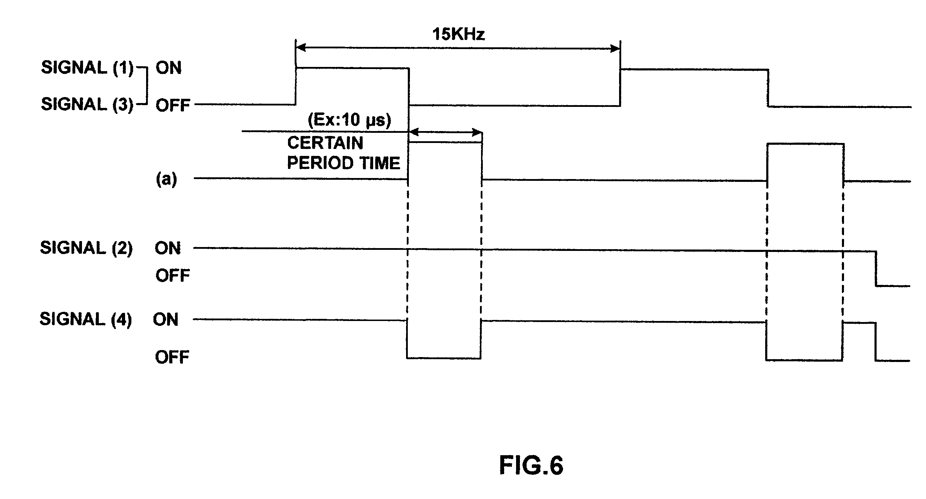

The signal (1) from the timing control circuit 13b is input into the partial hard-chopping circuit 19 as shown in FIG. 3. According to the present embodiment, the partial hard-chopping circuit 19 comprises a mono-stable multi-vibrator 19a and an AND circuit 19b. The signal (1) is transferred through to the output of the partial hard-chopping circuit 19 as signal (3). Additionally, signal (1) is input to the mono-stable multi-vibrator 19a which in turn outputs a signal (a) on Hi level for a certain period of time (typically between 10 to 15 µs) from the fall (OFF) of the signal (1) as shown in FIG. 6. This signal (a) is inverted and input into the input terminal of the AND circuit 19b. A signal (2), which is also the ON/OFF signal output from the AND circuit 12g of the current waveform generating circuit 12, is also input into an input terminal of the AND circuit 19b. It will be noted that the AND circuit 19b outputs a signal (4) which turns ON only when the signal (a) is on Lo level and signal (2) is ON.

In FIG. 2 and 3, signal (3) is input to the base of an upper transistor 20a in the first phase driver 20. A collector of the upper transistor 20a is connected to one end of the first phase winding 26. The other end of the first phase winding 26 is connected to the collector of a lower transistor 20b. The emitter of the lower transistor 20b is connected to a line of low potential supplied from the power circuit 14. Signal (4) is input into the base of the lower transistor 20b. A flywheel diode 20c is interposed between one end of the first phase winding 26 and the low potential line and another flywheel diode 20d is interdisposed between the other end of the first phase winding 26 and a high potential line. Therefore, current flows between the high and low potential lines and the first phase winding 26 when both of the transistors 20a and 20b are turned on (put in the conductive state) and the current fed to the first phase winding 26 may be stopped by turning off (put in the non-conductive state) either or both of the transistors. It is noted that the value of the current flowing through the first phase winding may be detected by the current sensor 23.

The switching of the upper transistor 20a is controlled based upon the current comparison signal output by the comparator lla when the ON/OFF signal output from the AND circuit 12g of the current waveform generating circuit 12 is on Hi level (power-on) . However, the relationship between the current comparison signal and the switching of the upper transistor is not that of one-to-one due to the regulation performed by the timing control circuit 13b as described above.

When the energization current value equals to or falls below the reference current value, signals (3) and (4) turn to ON as shown in FIG. 6 and thereby, both of the upper and lower transistors 20a and 20b turn on, thus feeding a current to the first phase coil 26. When the energization current value exceeds the reference current value, signal (3) turns to OFF. Accordingly, the mono-stable multi-vibrator 19a outputs a Hi level signal (a) for a predetermined period of time (10 to 15 µs). This signal (a) is inverted and is input to the AND circuit 19b, the output from which, signal (4), turns to OFF. Thereby, both transistors 20a and 20b are turned off (hard-chopping) and the current decays quickly (fall speed is fast) from the low potential line to the high potential line through the diodes 20c and 20d as the energy accumulated in the first phase winding 26 dissipates. Then, after the predetermined time has elapsed, the output signal (a) of the mono-stable multi-vibrator 19a turns to Lo level and the output signal (4) of the AND circuit 19b turns to ON. Thereby, the lower transistor 20b is turned on while the upper transistor 20a remains off (soft-chopping) and the current flows slowly (fall speed is slow) through a closed loop consisting of the diode 20c, the first phase winding 26 and the lower transistor 20b. The switching of the transistors 20a and 20b is repeatedly controlled as described above to regulate the energization of the first phase winding 26 of the SR motor 30.

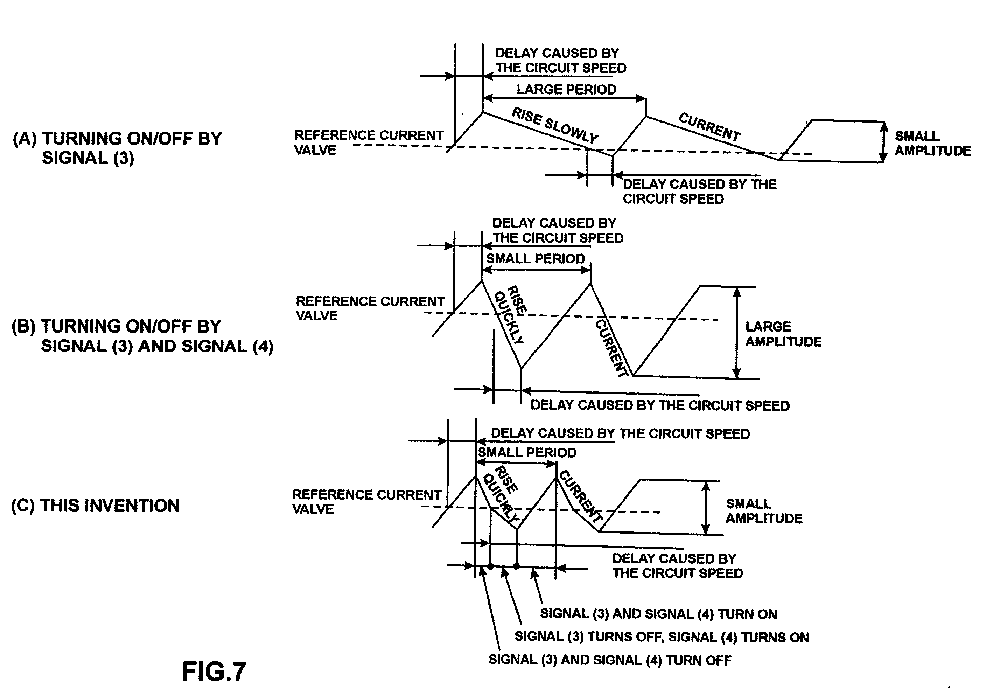

In the prior art energization controller discussed previously, switching of the transistors occurs either in the soft-chopping mode, as shown in FIGs. 14a and 14b, or in the hard-chopping mode, as shown in FIGs. 13 a and 13b. FIG. 7a is a time chart illustrating the reference current value and the waveform of the current flowing through the winding in the soft-chopping mode. FIG. 7b is a time chart illustrating the reference current value and the waveform of the current flowing through the winding in the hard-chopping mode. It is noted that the rise and fall inflection points of the current are brought about by the delay caused by circuit speed.

In the present embodiment, switching of the upper and lower transistors 20a and 20b is controlled in a mode in which hard-chopping and soft-chopping effects are combined. That is, the upper and lower transistors 20a and 20b are both turned off for a predetermined period of time and the winding current fall quickly to a desired level (the reference current value) when the reference current value exceeds or is equal to the energization current level as shown in FIG. 7c. Then, after the predetermined period of time has elapsed, only the lower transistor 20b is turned on and the fall of the winding current becomes moderate. Thereby, the winding current is suppressed from falling excessively in the region where the circuit delay is influential. As a result, the desired chopping frequency can be maintained and audible noise and vibrations are prevented. Additionally, the current amplitude in maintained at a reasonable level regardless of the inductance of the winding.

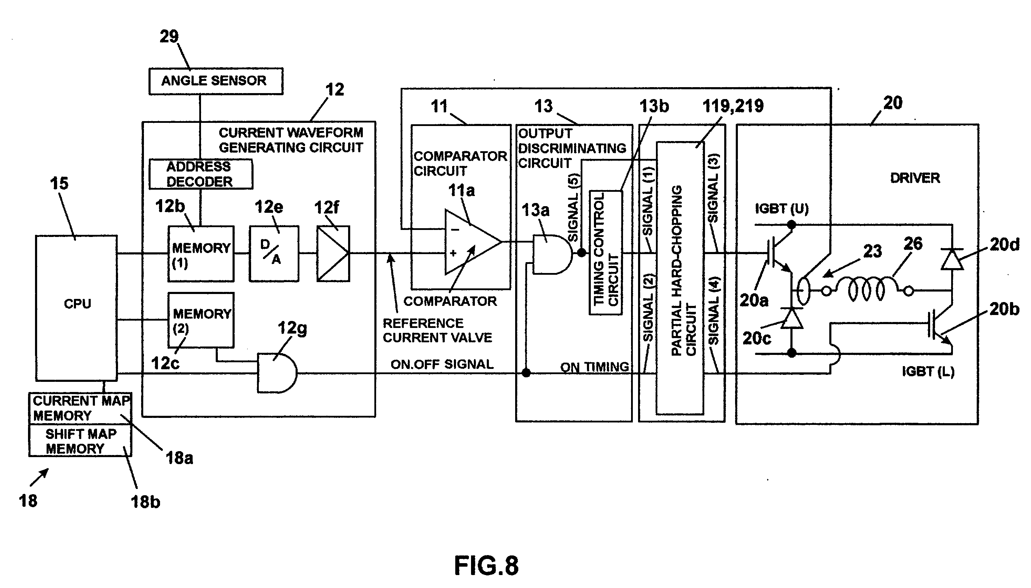

FIG. 8 is a block diagram illustrating an energization controller of an electric motor according to second and third embodiments of the present invention. Since the structure shown in FIG. 8 is the same as that shown in FIG. 2, except for the partial hard-chopping circuit, the same reference numerals denote to same components and an explanation thereof will be omitted here. It is noted that although FIG. 8 shows only the circuit for controlling the energization of the first phase winding 26 of the SR motor 30 in FIG. 1 in the same manner as FIG. 2, the unit actually contains the same circuits for controlling the energization of the second and third phase windings 27 and 28.

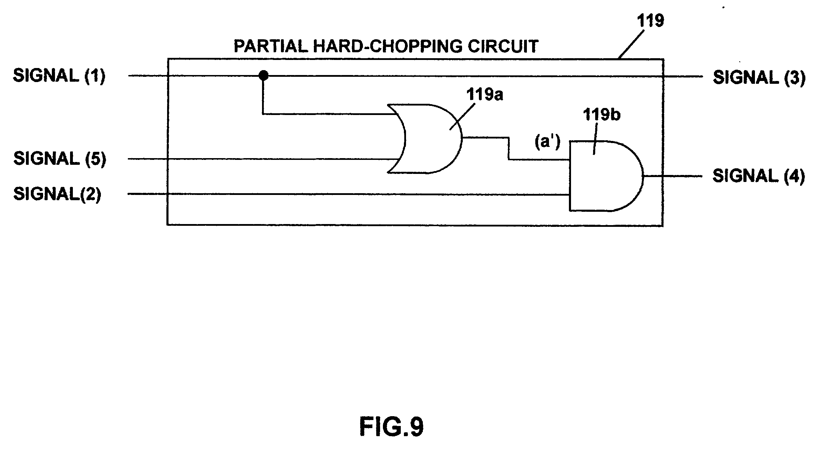

FIG. 9 shows the partial hard-chopping circuit 119 of a second embodiment. As shown in FIG. 9, the partial hard-chopping circuit 119 comprises an OR circuit 119a and an AND circuit 119b. The signal (1) output from the timing control circuit 13b of the output discriminating circuit 13 as well as the output signal (5) of the AND circuit 13a are input to the OR circuit 119a. An output signal (a') from the OR circuit 119a is input to the AND circuit 119b to which the ON/OFF signal output from AND circuit 12g is input as signal (2). It is noted that signal (3) is connected to the base of the upper transistor 20a and signal (4) output from the AND circuit 119b is connected to the base of the lower transistor 20b.

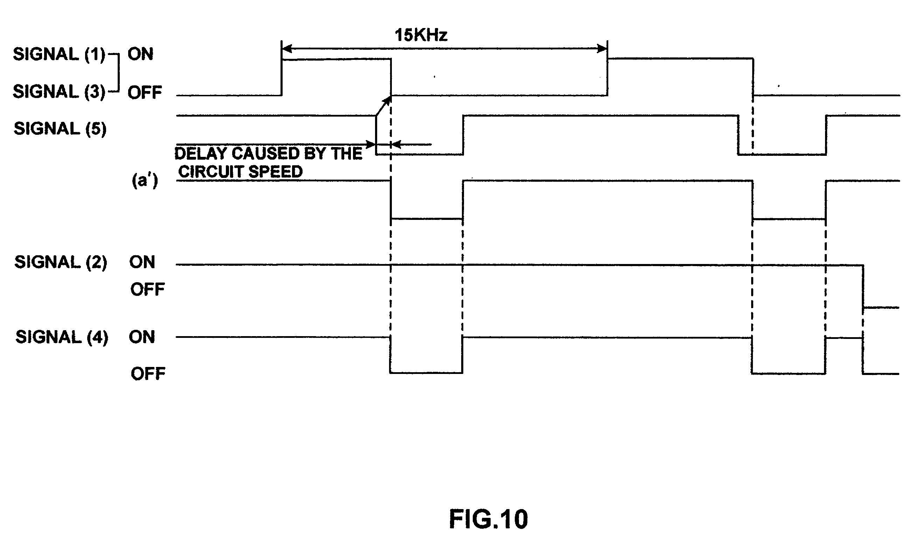

Referring to FIG. 10, in the second embodiment, the current comparison signal of the comparator 11a turns to a Lo level when the reference current value equals to falls below the energization current value and consequently, the signal (5) which is the output signal from the AND circuit 13a turns to Lo level. In response to this situation, signal (1) turns to OFF after a delay time due the reaction speed of the circuit and the signal (a') from the OR circuit 119a turns to Lo level. As a result, the signals (3) and (4) are both turned off and the upper and lower transistors 20a and 20b are both turned off, thus dissipating the current flowing in the phase winding 26 quickly. Due to this quick fall, the current comparison signal of the comparator 11a turns to Hi level when the energization current value falls below the reference current value and in response to that, signal (5) turns to Hi level. Since signal (1) will not turn to ON until the next synchronizing signal arrives, signal (3) is kept OFF. Thereby, signal (a') turns to Hi level and signal (4) turns ON, thus turning on only the lower transistor 20b. Therefore, according to this second embodiment it is possible to suppress the current from falling excessively in the region where circuit delay is influential by quickly lowering the current by turning off both the transistors 20a and 20b when the reference current value equals to or falls below the energization current value and by turning on only the lower transistor 20b when the energization current value falls below the reference current value. This arrangement permits the chopping frequency to be maintained at a desired level and the current amplitude to be kept at an acceptable level, thus preventing the generation of vibrational and audible noise.

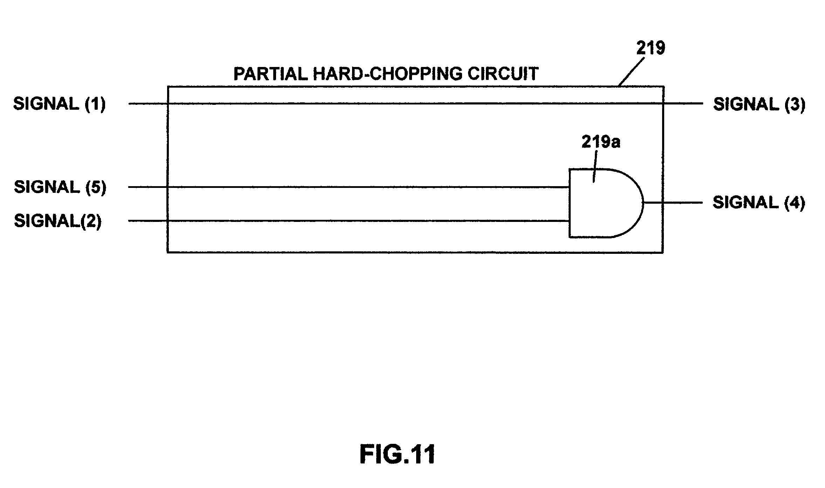

FIG. 11 shows the partial hard-chopping circuit 219 of a third embodiment. As shown, the partial hard-chopping circuit 219 comprises an AND circuit 219a. The output of the AND circuit 13a of the output discriminating circuit 13 is input as signal (5) and the ON/OFF signal from the AND circuit 12g is input as signal (2) to the AND circuit 219a. It is noted that signal (1) output from the timing control circuit 13b is connected to the base of the upper transistor 20a as signal (3) from the partial hard-chopping circuit 219 and signal (4) output from the AND circuit 219b is connected to the base of the lower transistor 20b.

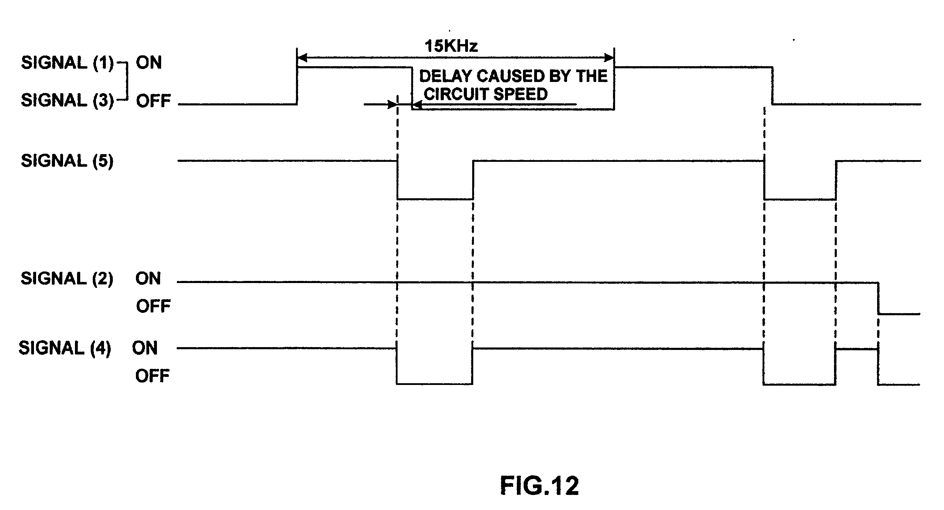

As shown in FIG. 12, the current comparison signal of the comparator 11a turns to Lo level when the reference current value equals to or falls below the energization current value and in response to this, signal (5) from the AND circuit 13a turns to Lo level. Consequently, signal (4) from the AND circuit 219a turns to OFF and signal (1) turns to OFF after a delay time due to the speed of the circuit. As a result, both of the signals (3) and (4) turn to OFF and the upper and lower transistors 20a and 20b are turned off, thus lowering the current level quickly. Due to this quick fall, the current comparison signal of the comparator 11a turns to Hi level when the energization current value falls below the reference current value and in response to that, signal (5) turns to Hi level, signal (4) turns to ON and the lower transistor 20b is turned on. Since signal (1) will not turn to ON until the next synchronizing signal arrives, signal (3) is kept OFF. Therefore, according to this third embodiment it is possible to suppress the current from falling excessively in the region where circuit delay is influential by quickly lowering the current by turning off both the transistors 20a and 20b when the reference current value equals to or falls below the energization current value and by turning on only the lower transistor 20b when the energization current value falls below the reference current value. This arrangement permits the chopping frequency to be maintained at a desired level and the current amplitude to be kept at an acceptable level, thus preventing the generation of vibrational and audible noise.

## Claims

1. An energization controller (10) of an electric motor (30) for controlling the energization of each phase winding (26,27,28) of the electric motor (30) by comparing the relationship of magnitude of a first signal, corresponding to the actual energization current flowing through the winding (26,27,28), with a second signal, which defines a reference current value, and by utilizing a binary signal (5) corresponding to the result of the comparison,
the energization controller (10) comprising;
a first switching means (20a) interposed between one end of the phase winding (26,27,28) and a first power line;
a second switching means (20b) interposed between the other end of the phase winding (26,27,28) and a second power line;
a first diode (20c) which is interposed between the one end of the phase winding (26,27,28) and the second power line so as to permit current to conduct from the latter to the former; and
a second diode (20d) which is interposed between the other end of the phase winding (26,27,28) and the first power line so as to permit current to conduct from the former to the latter;
CHARACTERIZED IN THAT
the energization controller (10) further comprises;
a synchronizing signal (CLK15K) providing a clock pulse at a predetermined frequency; and
a chopping control means which, when the first signal exceeds the second signal, turns off both of the first and second switching means (20a and 20b) and then after a predetermined period of time turns on only the second switching means (20b), and which, when the next clock pulse of the synchronizing signal (CLK15K) occurs after the first signal falls below the second, turns on both of the first and second switching means (20a and 20b).

2. An energization controller (10) of an electric motor (30) for controlling the energization of each phase winding (26,27,28) of the electric motor (30) by comparing the relationship of magnitude of a first signal, corresponding to the actual energization current flowing through the winding (26,27,28), with a second signal, which defines a reference current value, and by utilizing a binary signal (5) corresponding to the result of the comparison,
the energization controller (10) comprising;
a first switching means (20a) interposed between one end of the phase winding (26,27,28) and a first power line;
a second switching means (20b) interposed between the other end of the phase winding (26,27,28) and a second power line;
a first diode (20c) which is interposed between the one end of the phase winding (26,27,28) and the second power line so as to permit current to conduct from the latter to the former; and
a second diode (20d) which is interposed between the other end of the phase winding (26,27,28) and the first power line so as to permit current to conduct from the former to the latter;
CHARACTERIZED IN THAT
the energization controller (10) further comprises;
a synchronizing signal (CLK15K) providing a clock pulse at a predetermined frequency; and
a chopping control means which, when the first signal exceeds the second signal, turns off both of the first and second switching means (20a and 20b) and then, when the first signal falls below the second signal, turns on the second switching means (20b) only and then, when the next clock pulse of the synchronizing signal (CLK15K) occurs after the first signal falls below the second, turns on both of the first and second switching means (20a and 20b).
